# EUROPÄISCHE PATENTSCHRIFT

(11) **EP 1 034 364 B1**
(45) Veröffentlichungstag und Bekanntmachung des Hinweises auf die Patenterteilung: **18.09.2002**
(21) Anmeldenummer: 98965139.3
(22) Anmeldetag: 23.10.1998
(51) Int. Cl.: F02B 31/00

(54) **VERFAHREN ZUR ÜBERPRÜFUNG UND EINSTELLUNG DER WIRKUNG VON DRALLKANÄLEN BEI MEHRZYLINDRIGEN BRENNKRAFTMASCHINEN, INSBESONDERE BEI DIREKTEINSPRITZMOTOREN**
METHOD FOR CHECKING AND SETTING THE EFFECT OF SWIRL DUCTS IN MULTI-CYLINDER INTERNAL COMBUSTION ENGINES, IN PARTICULAR DIRECT INJECTION ENGINE
PROCEDE DE VERIFICATION ET REGLAGE DE L'EFFET DE CANAUX DE TURBULENCE DANS DES MOTEURS A COMBUSTION INTERNE A CYLINDRES MULTIPLES, NOTAMMENT DANS DES MOTEURS A INJECTION DIRECTE

(30) Priorität: 25.11.1997 DE 19752118
(43) Veröffentlichungstag der Anmeldung: 13.09.2000
(73) Patentinhaber: Bayerische Motoren Werke Aktiengesellschaft, 80788 München (DE)
(72) Erfinder: NIEDEREDER, Werner, A-4400 Steyr (AT); DWORSCHAK, Johannes, A-4400 Steyr (AT); RATZBERGER, Reinhard, A-4400 Steyr (AT)
(86) Internationale Anmeldenummer: EP9806731
(87) Internationale Veröffentlichungsnummer: WO99027241

(56) Entgegenhaltungen:
- EP-A- 0 492 265
- EP-A- 0 725 210
- DE-A- 2 613 275
- DE-A- 3 936 263
- DE-C- 19 535 486
- OMORI S ET AL: "EFFECT OF INTAKE PORT FLOW PATTERN ON THE IN-CYLINDER TUMBLING AIR FLOW IN MULTI-VALVE SI ENGINES" SAE TECHNICAL PAPER SERIES, Nr. 910477, 25. Februar 1991, Seiten 1-12, XP002022941

## Beschreibung

Die Erfindung bezieht sich nach dem Oberbegriff des Patentanspruches 1 auf ein Verfahren zur Überprüfung der Wirkung von Drallkanälen bei Serien-Zylinderköpfen von mehrzylindrigen Brennkraftmaschinen, insbesondere bei Direkteinspritzmotoren, bei dem einem Zylinderkopf mit wenigstens einem Drallkanal je Zylinder brennraumseitig ein mit Unterdruck beaufschlagter Zylinder, insbesondere Simultan-Zylinder mit einer Dralimeßvorrichtung zugeordnet wird, und den mittels des Drallkanals und über ein im Hub unterschiedlich einstellbares Einlaßventil durchsatzabhängig erzeugten Drallströmungen je Zylinder jeweils eine Drallzahl zugeordnet wird, wobei eine aus diesen zylinderbezogenen Drallzahlen formelmäßig ermittelte Drallzahl zu einem motorspezifischen Drall-Toleranzband in Relation gebracht wird.

Es ist bekannt, daß bei einschließlich der Drallkanäle im Gießverfahren hergestellten Zylinderköpfen relativ geringfügige Lageabweichungen der Kerne zur Ausformung der Drallkanäle zu erheblich schlechten Drallergebnissen führen mit dem Nachteil eines nicht unerheblichen Ausschußes an Zylinderköpfen. Zur Überprüfung der Qualität bzw. Wirkung der gegossenen Drallkanäle kommt das gattungsgemäße Verfahren zur Anwendung, wie es beispielsweise aus der DE 26 13 275 C bekannt ist. Dieses insbesondere zur Entwicklung eines Drallkanals vorgesehene Verfahren bedient sich zur Ermittlung einer optimalen Drallströmung im Zylinder unterschiedlicher, dem Drallkanal bewegbar zugeordneter Blenden zur jeweiligen Drallausbildung, um letztendlich die Geometrie des Drallkanals festlegen zu können. Weiter offenbart dieses Dokument auch die Verwendbarkeit des Verfahrens für einen Serien-Zylinderkopf mit Drallkanälen.

Ein weiteres Drall-Meßverfahren mit Vorrichtung ist aus der DE 195 35 486 C bekannt, wobei die Intensität des jeweiligen Dralls meßtechnisch in neuartiger Weise bestimmt ist. Aus der DE 40 18 065 A ist ein Zylinderkopf für einen Dieselmotor bekannt, der je Zylinder zwei diametral angeordnete Einlaßkanäle aufweist, von denen einer zur Drallerzeugung ein Drallkanal ist urd der andere zusätzlich eine steuerbare Drosseleinrichtung aufweist. Weiter ist aus der DE 39 36 263 A ein Zylinderkopf mit zwei Einlaßkanälen je Zylinder bekannt, wobei sowohl ein Drallkanal als auch ein Füllkanal über einen gemeinsamen Drehschieber gesteuert sind. Auch die sonstigen bei Direkteinspritzmotoren bekannten Mittel zur Drallbeeinflußung wie variable Ventilsteuerung, Ventilabschaltung oder einer in der Sauganlage vorgesehenen Klappensteuerung sind für eine zylinderindividuelle Drallkorrektor zu aufwendig.

Der Erfindung liegt die Aufgabe zugrunde, bei Anwendung des gattungsgemäßen Verfahrens für im Verlauf festgelegte Drallkanäle Maßnahmen zur nachträglichen zylinderindividuellen Drallkorrektur aufzuzeigen.

Diese Aufgabe ist mit dem Patentanspruch 1 dadurch gelöst, daß in Abhängigkeit einer Drallzahl außerhalb des Drall-Toleranzbandes der zugehörige Drallkanal im Zylinderkopf in einem Kanalabschnitt in seinem Querschnitt nachträglich entsprechend kleiner oder größer gestaltet wird.

Im einzelnen ist dies in einer ersten Ausgestaltung der Erfindung in vorteilhaft einfacher Weise dadurch erreicht, daß bei zu geringem Drall gemäß einer das Drall-Toleranzband unterschreitenden Drallzahl zur Drallsteigerung in dem Drallkanal des Zylinderkopfes eine Buchse mit einem gegenüber dem übrigen Drallkanal-Querschnitt verringerten Durchflußquerschnitt nachträglich angeordnet wird, oder/und daß ein Ventilsitzring mit kleinerem Innendurchmesser eingesetzt wird.

In einer zweiten erfindungsgemäßen Ausgestaltung wird vorgeschlagen, daß bei zu starkem Drall gemäß einer das Drall-Toleranzband überschreitenden Drallzahl zur Drallsenkung eine in dem Drallkanal definierte Engstelle im Durchströmquerschnitt entsprechend vergrößert wird, oder/und ein Ventilsitzring in seinem Innendurchmesser und/oder ein Austrittswinkel des Ventilsitzringes vergrößert wird, wobei der Austrittswinkel eines in Drallrichtung weisenden Ventilsitzringes gegebenenfalls in eine kegelabschnittsförmige Ansenkung im brennraumseitigen Boden des Zylinderkopfes übergeht.

Mit den aufgezeigten erfindungsgemäßen Maßnahmen ist in einfacher Weise eine zylinderindividuelle Korrektur der Drallströmung erzielt und somit einerseits der Ausschuß an Zylinderköpfen verringert und zum anderen bei einer direkt einspritzenden Brennkraftmaschine die Verbrennung in sämtlichen Zylindern vergleichmäßigt mit dem Vorteil eines geringeren Verbrauches und einer gesteigerten Abgasqualität.

Eine besonders vorteilhafte Nacharbeitslösung ist erreicht mit einem jedem Zylinder im Zylinderkopf zugeordneten Drallkanal mit einem im wesentlichen zur Zylinderachse parallelen Kanalverlauf im Zylinderkopf, wobei ein in diesem Kanalverlauf ausgebildeter Kanalabschnitt in einfacher Weise entweder eine nachträgliche Querschnittsvergrößerung oder einen nachträglichen Einsatz einer Buchse mit reduziertem Durchflußquerschnitt vorteilhaft ermöglicht. in einem zur Zylinderachse parallelen Kanalverlauf kann ein derart erfindungsgemäß vorgesehener Kanalabschnitt spanabhebend vorteilhaft einfach entweder für eine nachträgliche Querschnittsvergrößerung oder aber auch zum Einsatz einer Buchse mit reduziertem Durchflußquerschnitt bearbeitet werden.

Die Erfindung ist im folgenden beschrieben.

Bei einem Verfahren zur Überprüfung der Wirkung von in einem gegossenem Serien-Zylinderkopf angeordneten Drallkanälen für eine mehrzylindrige Brennkraftmaschine, insbesondere Direkteinspritzmotor, wird dem Zylinderkopf mit wenigstens einem Drallkanal je Zylinder brennraumseitig ein mit Unterdruck beaufschlagter Zylinder, insbesondere Simultan-Zylinder mit einer Drallmeßvorrichtung zugeordnet. Für das bekannte Überprüfungs-Verfahren kann die Drallmeßvorrichtung entweder mit Hilfe der Flügelradanemometrie oder nach der aus der DE-C 26 13 275 bekannten Momenten-Meßmethode betrieben sein. Den mittels des Drallkanals und über ein im Hub unterschiedlich einstellbares Einlaßventil - vorzugsweise maximaler Ventilhub und 2/3 maximaler Ventilhub - durchsatzabhängig erzeugten Drallströmungen je Zylinder wird jeweils eine Drallzahl zugeordnet, wobei aus diesen zylinderbezogenen Drallzahlen eine formelmäßig gemittelte Drallzahl zu einem motorspezifischen Drall-Toleranzband in Relation gebracht wird.

Um bei einem nach dem vorgenannten Verfahren überprüften Zylinderkopf eine beispielsweise durch eine fehlerhafte Kernlage für einen Drallkanal verursachte Drallkorrektur nachträglich für einen jeweiligen Zylinder der Brennkraftmaschine durchführen zu können, wird erfindungsgemäß in Abhängigkeit einer Draltzahl außerhalb des Drall-Toleranzbandes der zugehörige Drallkanal im Zylinderkopf in einem Kanalabschnitt in seinem Querschnitt nachträglich entsprechend kleiner oder größer ausgebildet bzw. gestaltet.

Bei zu geringem Drall gemäß einer das Drall-Toleranzband unterschreitenden Drallzahl wird zur Drallsteigerung in dem Kanal des Zylinderkopfes vorzugsweise eine Buchse mit einem gegenüber dem übrigen Drallkanal-Querschnitt verringerten Durchflußquerschnitt nachträglich angeordnet. Weiter ist als Kanalabschnitt auch ein Ventilsitzring anzusehen, der zur Drallsteigerung gegen einen solchen mit kleinerem Innendurchmesser ausgetauscht wird. Zur gewünschten Drallsteigerung kann jede der vorgenannten Maßnahmen für sich oder aber auch in Kombination verwendet sein.

Ist demgegenüber ein zu starker Drall gemäß einer das Drall-Toleranzband überschreitenden Drallzahl gegeben mit der Folge einer erforderlichen Drallsenkung, so wird gemäß einer bevorzugten erfindungsgemäßen Maßnahme eine in dem Drallkanal definierte Engstelle im Durchströmquerschnitt nachträglich entsprechend vergrößert. Weiter kann für sich oder in Kombination mit dieser Maßnahme ein Ventilsitzring in seinem Innendurchmesser nachträglich vergrößert werden und/oder ein Austrittswinkel des Ventilsitzringes, wobei der Austrittswinkel eines in Drallrichtung weisend angeordneten Ventilsitzringes in eine kegelabschnittsförmige Ansenkung im brennraumseitigen Boden des Zylinderkopfes übergehend gestaltet wird.

Eine erfindungsgemäße drallabhängige Kanalquerschnitts-Änderung wird vorteilhaft angewendet bei einem Drallkanal, der stromauf einer vorzugsweise in Drallrichtung weisend angeordneten, ventilgesteuerten Einlaßöffnung einen im wesentlichen zur Zylinderachse parallelen Kanalverlauf im Zylinderkopf aufweist mit einem derart ausgebildeten Kanalabschnitt, daß entweder eine nachträgliche Querschnittsvergrößerung oder ein nachträglicher Einsatz einer Buchse mit reduziertem Durchflußquerschnitt durch eine jeweils einfach durchführbare spanabhebende Bearbeitung des Kanalabschnittes errreicht wird.

Die erfindungsgemäße drallabhängige Kanalquerschnitts-Änderung kann ferner auch bei einem jedem Zylinder im Zylinderkopf zusätzlich zugeordneten und zur Zylinderachse vorzugsweise querverlaufenden Füllkanal angewendet werden.

Mit der erfindungsgemäßen Nacharbeitslösung für jeden Drallkanal und/oder Füllkanal kann der Ausschuß an gegossenen Zylinderköpfen wesentlich reduziert werden, wobei mit der nachträglichen Drallkorrektur insbesondere im unteren Lastbereich die Verbrennung wesentlich verbessert wird mit dem Vorteil einer gesteigerten Abgasqualität.

## Patentansprüche

1. Verfahren zur Überprüfung der Wirkung und Einstellung von Drallkanälen bei Serien-Zylinderköpfen von mehrzylindrigen Brennkraftmaschinen, insbesondere bei Direkteinspritzmotoren,
- bei dem einem Zylinderkopf mit wenigstens einem Dralikanal je Zylinder brennraumseitig ein mit Unterdruck beaufschlagter Zylinder, insbesondere Simultan-Zylinder mit einer Drallmeßvorrichtung zugeordnet wird, und
- den mittels des Drallkanals und über ein im Hub unterschiedlich einstellbares Einlaßventil durchsatzabhängig erzeugten Drallströmungen je Zylinder jeweils eine Drallzahl zugeordnet wird, wobei
- eine aus diesen zylinderbezogenen Drallzahlen formelmäßig ermittelte Drallzahl zu einem motorspezifischen Drall-Toleranzband in Relation gebracht wird,
**dadurch gekennzeichnet,**
- **daß** in Abhängigkeit einer Drallzahl außerhalb des Drall-Toleranzbandes der zugehörige Drallkanal im Zylinderkopf in einem Kanalabschnitt in seinem Querschnitt nachträglich entsprechend kleiner oder größer gestaltet wird.

2. Verfahren nach Anspruch 1, **dadurch gekennzeichnet,**
- **daß** bei verringertem Drall gemäß einer das Drall-Toleranzband unterschreitenden Drallzahl zur Drallsteigerung in dem Drallkanal des Zylinderkopfes eine Buchse mit einem gegenüber dem übrigen Drallkanal-Querschnitt verringerten Durchflußquerschnitt nachträglich angeordnet wird, oder/und
- **daß** ein Ventilsitzring mit kleinerem Innendurchmesser eingesetzt wird.

3. Verfahren nach Anspruch 1, **dadurch gekennzeichnet,**
- **daß** bei erhöhtem Drall gemäß einer das Drall-Toleranzband überschreitenden Drallzahl zur Drallsenkung
- eine in dem Drallkanal definierte Engstelle im Durchströmquerschnitt entsprechend vergrößert wird, oder/und
- ein Ventilsitzring in seinem Innendurchmesser und/oder
- ein Austrittswinkel des Ventilsitzringes vergrößert wird, wobei
- der Austrittswinkel eines in Drallrichtung weisend angeordneten Ventilsitzringes in eine kegelabschnittsförmige Ansenkung im brennraumseitigen Boden des Zylinderkopfes übergehend gestaltet wird.

4. Verfahren nach Anspruch 2 und/oder 3, **dadurch gekennzeichnet,**
- **daß** eine drallabhängige Kanalquerschnitts-Änderung bei einem jedem Zylinder im Zylinderkopf zugeordneten Drallkanal angewendet wird, der
- stromauf einer in Drallrichtung weisend angeordneten, ventilgesteuerten Einlaßöffnung einen im wesentlichen zur Zylinderachse parallelen Kanalverlauf im Zylinderkopf aufweist mit einem derart ausgebildeten Kanalabschnitt, daß
- entweder eine nachträgliche Querschnittsvergrößerung oder
- ein nachträglicher Einsatz einer Buchse mit reduziertem Durchflußquerschnitt erreichbar ist.

5. Verfahren nach einem der Ansprüche 1 bis 4, **dadurch gekennzeichnet, daß** eine drallabhängige Kanalquerschnitts-Änderung ferner bei einem jedem Zylinder im Zylinderkopf zusätzlich zugeordneten, insbesondere zur Zylinderachse quer verlaufenden Füllkanal angewendet wird.

## Claims

1. A method of checking the action and adjustment of swirl channels in mass-produced cylinder heads of multi-cylinder internal combustion engines, especially in direct injection engines,
- wherein a negatively pressurised cylinder, especially a simultaneous cylinder with a swirl-measuring device, is associated on the combustion-chamber side with a cylinder head comprising at least one swirl channel per cylinder, and
- a swirl number is associated with the swirl flow in each cylinder generated in dependence on the flow rate by the swirl channel via a variable-stroke inlet valve, wherein
- an average swirl number obtained by formula from the swirl numbers for each cylinder is brought into relation with a swirl tolerance range specific to the engine,
**characterised in that**
- if a swirl number is outside the tolerance range of the associated swirl channel in the cylinder head, the cross-section of a channel portion is subsequently made smaller or larger as appropriate.

2. A method according to claim 1, **characterised in that**
- if the swirl is reduced and the swirl number is below the tolerance range, the swirl in the cylinder-head channel is increased by subsequently installing a sleeve with a flow cross-section less than that of the rest of the channel, and/or
- a valve seat ring with a smaller internal diameter is installed.

3. A method according to claim 1, **characterised in that**
- if the swirl is increased and the swirl coefficient exceeds the tolerance range, the swirl is reduced by
- appropriately increasing the flow cross-section of a constriction defined in the swirl channel, and/or
- increasing the inner diameter of a valve seat ring and/or
- increasing the outlet angle of the valve seat ring, wherein
- the outlet angle of a valve seat ring disposed pointing in the direction of swirl is shaped so that it merges into a frusto-conical counter-bore in the base of the cylinder head next to the combustion chamber.

4. A method according to claim 2 and/or 3, **characterised in that**
- a change in channel cross-section depending on the swirl is made when a swirl channel is associated with each cylinder in the cylinder head and
- upstream of a valve-controlled inlet opening pointing in the direction of swirl, the channel extends in the cylinder head substantially parallel to the cylinder head and comprises a portion shaped so that
- either the cross-section can subsequently be increased or
- a sleeve having a reduced flow cross-section can subsequently be fitted.

5. A method according to any of claims 1 to 4, **characterised in that** the flow cross-section is altered in dependence on swirl also in the case where a filling channel, especially extending transversely of the cylinder axis, is additionally disposed in the head of each cylinder.

## Revendications

1. Procédé de contrôle de l'effe du réglage de canaux de turbulence de culasses série de moteurs à combustion interne à plusieurs cylindres, notamment de moteurs à injection directe, selon lequel
- à une culasse ayant au moins un canal de turbulence, à chaque cylindre, du côté de la chambre de combustion, on associe un cylindre mis en dépression, notamment un cylindre simultané avec un dispositif de mesure de turbulence et
- on attribue une valeur de turbulence respective aux écoulements turbulents dans chaque cylindre, générée en fonction du débit à l'aide du canal de turbulence et ce débit étant réglable par la soupape d'admission en fonction de sa course, et
- on met en relation avec une bande de tolérance de turbulence spécifique au moteur, une valeur de turbulence obtenue selon une formule à partir des valeurs de turbulence rapportées au cylindre,
**caractérisé en ce qu'**
en fonction d'une valeur de turbulence en dehors de la bande de tolérance de turbulence du canal de turbulence correspondant dans la culasse, on augmente ou on réduit la section dans un segment de canal.

2. Procédé selon la revendication 1,
**caractérisé en ce que**
pour une turbulence réduite, la valeur de turbulence étant inférieure à la bande de tolérance de turbulence, pour augmenter la turbulence dans le canal de turbulence de la culasse, on y place a posteriori une douille de section de passage réduite par rapport à celle du canal de turbulence et/ou
- on place un anneau de siège de soupape de diamètre intérieur plus petit.

3. Procédé selon la revendication 1,
**caractérisé en ce que**
pour une turbulence augmentée, selon une valeur de turbulence dépassant la bande de tolérance de turbulence, pour abaisser la turbulence on agrandit de manière correspondante la section de passage du point étroit défini dans le canal de turbulence ou/et on augmente le diamètre intérieur et/ou l'angle de sortie de l'anneau de siège de soupape,
l'angle de sortie d'un anneau de siège de soupape tourné dans la direction de turbulence, étant mis en forme de manière transitoire dans une cavité en forme de tronc de cône dans le fond situé du côté de la chambre de combustion de la culasse.

4. Procédé selon la revendication 2 et/ou 3,
**caractérisé en ce qu'**
on applique une modification de section de canal dépendant de la turbulence pour un canal de turbulence associé à chaque cylindre de la culasse, qui
- comporte en amont d'un orifice d'admission commandé par soupape, tourné dans la direction de la turbulence, un tracé de canal essentiellement parallèle à l'axe du cylindre dans la culasse, avec un segment de canal ainsi réalisé de façon qu'
- on puisse effectuer soit une augmentation a posteriori de la section soit mettre en place a posteriori une douille de section de passage réduite.

5. Procédé selon l'une quelconque des revendications 1 à 4,
**caractérisé en ce qu'**
on applique une variation de la section de canal dépendant de la turbulence en outre pour chaque cylindre de la culasse, a posteriori, notamment pour le canal de remplissage dirigé transversalement à l'axe des cylindres.
